# EUROPÄISCHE PATENTANMELDUNG

(11) **EP 2 317 593 A1**
(43) Veröffentlichungstag der Anmeldung: **04.05.2011**
(21) Anmeldenummer: 09013682.1
(22) Anmeldetag: 30.10.2009
(51) Int. Cl.: H01M 10/04

(54) **Fertigungsanlage für eine Akkuflachzelle**

(71) Anmelder: ads-tec GmbH, 70771 Leinfelden-Echterdingen (DE)
(72) Erfinder:
(74) Vertreter: Wasmuth, Rolf

(57) **Zusammenfassung**

Eine Fertigungsanlage (10, 100) für eine Akkuflachzelle (1) aus einem Stapel (2) wechselnd aufeinander geschichteter Zuschnitte (3, 4) eines Anodenmaterials (61) und eines Kathodenmaterials (62), die durch zwischengelegte Zuschnitte (5) von Separatormaterial (60, 64) elektrisch voneinander getrennt sind, legt die Zuschnitte (3, 4, 5) vorteilhaft über mindestenseine Walze (25, 26, 27) durch Abrollen auf dem Stapel (2) ab.

## Beschreibung

Die Erfindung betrifft eine Fertigungsanlage für eine Akkuflachzelle der im Oberbegriff des Anspruchs 1 angegebenen Gattung.

Aus der DE 20 2009 009 178 U1 ist eine Fertigungsanlage für eine Akkuflachzelle bekannt, bei der die Zuschnitte von Anodenmaterial, Kathodenmaterial und Separatormaterial von Bandmaterial ausgeschnitten werden. Der Transport zu dem Stapel erfolgt über einen Einleger, der zugleich als Schnittstempel dient.

Die Zuschnitte sind sehr dünn und müssen positionsgenau abgelegt werden. Dies hat sich als schwierig erwiesen.

Der Erfindung liegt die Aufgabe zugrunde, eine Fertigungsanlage für eine Akkuflachzelle anzugeben, mit der auf einfache Weise ein schnelles und einfaches Ablegen der Zuschnitte auf dem Stapel möglich ist.

Diese Aufgabe wird durch eine Fertigungsanlage mit den Merkmalen des Anspruchs 1 gelöst.

Dadurch, dass die Zuschnitte durch Abrollen auf dem Stapel abgelegt werden, ist eine genaue Positionierung der Zuschnitte auf dem Stapel auf einfache Weise möglich. Durch die abrollende Bewegung kann außerdem die Ausbildung eines Luftpolsters zwischen dem abgelegten Zuschnitt und dem Stapel vermieden werden, so dass auch ein nachträgliches Verrutschen des Zuschnitts weitgehend vermieden werden kann. Die abrollende Bewegung kann schnell ausgeführt werden. Faltenbildungen oder dgl. können durch die Rollbewegung weitgehend vermieden werden. Das Abrollen kann dabei kraftfrei oder unter geringem Druck auf den Stapel erfolgen. Dabei sind insbesondere getrennte Zuschnitte von Separatormaterial, Anodenmaterial und Kathodenmaterial vorgesehen, die nacheinander auf dem Stapel abgelegt werden. Es kann jedoch auch vorgesehen sein, dass das Bandmaterial bereits mit dem Anodenmaterial und/oder dem Kathodenmaterial verbundenes Separatormaterial umfasst oder dass die Kathodenzuschnitte und/oder die Anodenzuschnitte nach dem Zuschneiden mit Separatorzuschnitten verbunden werden und dass diese Zuschnitte gemeinsam abgelegt werden.

Vorteilhaft werden die Zuschnitte in der Fertigungsanlage ausschließlich über Abrollen aufgenommen und abgelegt. Andere Einrichtungen zur Handhabung neben den für das Abrollen benötigten Walzen können dadurch entfallen. Es ergibt sich ein einfacher Aufbau. Eine positionsgenaue Handhabung der Zuschnitte ist so auf einfache Weise möglich.

Vorteilhaft ist dem Stapel mindestens ein Niederhalter zugeordnet, der bereits auf dem Stapel abgelegte Zuschnitte auf dem Stapel hält. Um ein Überfahren des Niederhalters ohne eine Bewegung senkrecht zur Ebene des Stapels zu ermöglichen, ist vorgesehen, dass die Walze in ihrer Umfangsfläche eine Aussparung für den Niederhalter besitzt. Der Umfang der Walze entspricht dabei vorteilhaft etwa der Länge des Zuschnitts zuzüglich der Breite der Aussparung.

Es ist insbesondere vorgesehen, dass Anodenmaterial, Kathodenmaterial und Separatormaterial sortenrein gehandhabt werden, also jede Handhabungseinrichtung nur mit einer Materialsorte in Kontakt kommt. Insbesondere sind für jede Materialsorte mindestens zwei Niederhalter vorgesehen, die in Abrollrichtung der Walze einen Abstand zueinander besitzen. Dadurch kann der Stapel während des Abrollens an mindestens einer Seite fixiert werden. Vorteilhaft ist der Stapel zu jedem Zeitpunkt an mindestens zwei in Abrollrichtung voneinander beabstandeten Punkten fixiert. Insbesondere ist vorgesehen, dass der Stapel zu jedem Zeitpunkt über mindestens einen Niederhalter und entweder eine in Abrollrichtung von dem Niederhalter beabstandete Walze oder einen in Abrollrichtung von dem Niederhalter beabstandeten weiteren Niederhalter fixiert ist.

Es ist vorgesehen, dass die Zuschnitte über mindestens eine Transportwalze zu dem Stapel transportiert und auf dem Stapel abgelegt werden. Die Transportwalze führt dabei insbesondere eine lineare Bewegung durch, so dass ein einfacher Bewegungsablauf gegeben ist. Aufgrund der Aussparung für den Niederhalter ist diese lineare Bewegung ohne weiteres möglich.

Es ist vorgesehen, dass das Anodenmaterial, das Kathodenmaterial und das Separatormaterial der Fertigungsanlage als Bandmaterial zugeführt werden, und dass die Fertigungsanlage mindestens eine Schneideinrichtung für das Bandmaterial besitzt. Dabei ist vorteilhaft eine Schneideinrichtung für Anodenmaterial, eine Schneideinrichtung für Kathodenmaterial und mindestens eine Schneideinrichtung für Separatormaterial vorgesehen. Vorteilhaft umfasst die Schneideinrichtung eine Schneidwalze und die Zuschnitte werden von der Schneidwalze an die Transportwalze übergeben. Die Schneidwalze nimmt das Bandmaterial auf. Sobald der Zuschnitt von dem Bandmaterial abgeschnitten ist, erfolgt die Übergabe von der Schneidwalze an die Transportwalze durch abrollende Bewegung. Dadurch können die Zuschnitte ausschließlich über Abrollbewegungen gehandhabt werden.

Vorteilhaft erfolgt die Fixierung der Zuschnitte auf der Walze über Unterdruck. Dadurch wird eine einfache, gute Fixierung erreicht. Es kann jedoch auch eine mechanische Fixierung, beispielsweise über weitere Niederhalter, vorgesehen sein. Es ist vorgesehen, dass jeder Zuschnitt so lange auf einer Walze fixiert bleibt, bis er auf der nachfolgenden Walze oder auf dem Stapel fixiert ist und erst dann ein vollständiges Lösen von der abgebenden Walze erfolgt. Dadurch sind die Zuschnitte zu jedem Zeitpunkt sicher gehalten, so dass eine definierte Positionierung möglich ist.

Vorteilhaft umfasst die Walze mehrere Saugkanäle, die mit einer Unterdruckquelle verbunden sind. Jeder Saugkanal mündet dabei vorteilhaft über mehrere Saugöffnungen an der Umfangsfläche der Walze. Die Saugöffnungen eines Saugkanals sind in axialer Richtung der Walze benachbart zueinander angeordnet. Die Saugkanäle erstrecken sich dabei vorteilhaft in axialer Richtung. Werden die Saugkanäle zu unterschiedlichen Zeiten mit Unterdruck beaufschlagt, so lässt sich eine gesteuerte Fixierung und ein gesteuertes Lösen der Zuschnitte von den Walzen auf einfache Weise erreichen. Hierzu kann vorgesehen sein, dass die Saugkanäle ventilgesteuert mit der Unterdruckquelle verbunden sind. Es kann jedoch auch vorgesehen sein, dass die Saugkanäle über mindestens eine Steuernut mit der Unterdruckquelle verbunden werden. Zweckmäßig wird das Ablösen der Zuschnitte von der Walze durch Druckluft unterstützt.

Ausführungsbeispiele der Erfindung werden im Folgenden anhand der Zeichnung erläutert. Es zeigen:
- Fig. 1: eine schematische Darstellung einer Akku- flachzelle,
- Fig. 2: einen schematischen Schnitt durch die Akku- flachzelle aus Fig. 1 entlang der Linie II-II in Fig. 1,
- Fig. 3: eine Seitenansicht einer Fertigungsanlage für eine Akkuflachzelle,
- Fig. 4: eine perspektivische Darstellung der Fertigungsanlage aus Fig. 3,
- Fig. 5: eine perspektivische Darstellung der Rück- seite der Fertigungsanlage aus Fig. 4,
- Fig. 6 bis 8: perspektivische Darstellungen der zweiten Schneidstation der Fertigungsanlage bei der Übergabe der Zuschnitte auf die Transport- walzen,
- Fig. 9 und 10: ausschnittsweise Seitenansichten auf die Transporteinrichtung,
- Fig. 11: eine Draufsicht auf den Stapel in Richtung des Pfeils XI in Fig. 8,
- Fig. 12 und 13: Seitenansichten des Stapels beim Ablegen von Kathodenzuschnitt und Separator- zuschnitt,
- Fig. 14: eine Seitenansicht der Fertigungsanlage zu Beginn der Übergabe von Anodenzuschnitt und Separatorzuschnitt an die Transport- einrichtung,
- Fig. 15 und 16: perspektivische Darstellungen einer Schneidwalze,
- Fig. 17: eine perspektivische Darstellung der Steuerungsplatte der Schneidwalze,
- Fig. 18: eine Seitenansicht auf die transparent ge- zeichnete Schneidwalze mit der Steuerungs- platte in Richtung des Pfeils XVIII aus Fig. 15,
- Fig. 19: eine Seitenansicht eines Ausführungs- beispiels einer Fertigungsanlage für eine Akkuflachzelle,
- Fig. 20: einen Ablaufplan zum Ablauf eines Ver- fahrens zur Herstellung einer Akkuflach- zelle.

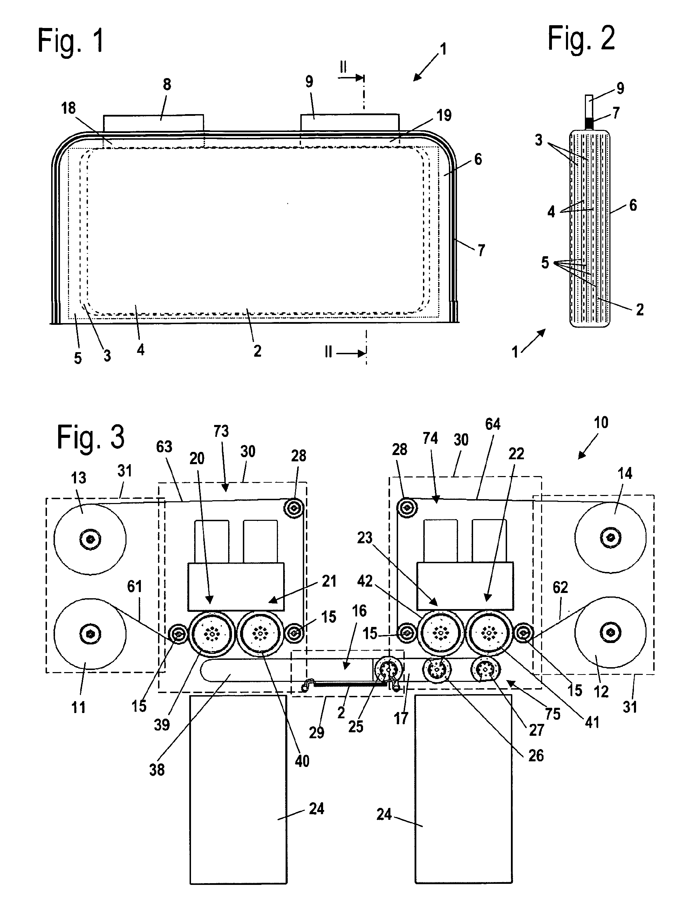

In den Figuren 1 und 2 ist schematisch eine Akkuflachzelle 1 gezeigt. Die Akkuflachzelle 1 besteht aus einem Stapel 2 von abwechselnd übereinander geschichteten Anodenzuschnitten 3 und Kathodenzuschnitten 4. Zwischen jedem Anodenzuschnitt 3 und Kathodenzuschnitt 4 ist ein Separatorzuschnitt 5 angeordnet. Die Anodenzuschnitte 3 besitzen jeweils eine Kontaktlasche 18 und die Kathodenzuschnitte 4 eine Kontaktlasche 19. Alle Kontaktlaschen 18 und alle Kontaktlaschen 19 sind jeweils miteinander kontaktiert und mit einem Anodenanschluss 8 bzw. einem Kathodenanschluss 9 verbunden. Der Stapel 2 ist von einem Hüllmaterial 6 umgeben, das isolierend ausgebildet ist und das taschenartig um den Stapel 2 gelegt und an drei Seiten mit einer Siegelnaht 7 dichtend verschlossen ist. Wie Fig. 1 schematisch zeigt, können die Anodenzuschnitte 3, die Kathodenzuschnitte 4 und die Separatorzuschnitte 5 geringfügig voneinander abweichende Größen besitzen. Alle Zuschnitte 3, 4, 5 sind jedoch im Wesentlichen rechteckig, wobei die Kathodenzuschnitte 4 und die Anodenzuschnitte 3 im Ausführungsbeispiel abgerundete Kanten aufweisen.

Die Anodenzuschnitte 3 und Kathodenzuschnitte 4 sind aus beschichtetem Metall ausgebildet und besitzen eine Dicke von wenigen Zehntel Millimetern. Diese Separatorzuschnitte 5 sind aus elektrisch isolierendem Material und können eine Dicke von deutlich unter einem Zehntel Millimeter besitzen. Bei der Herstellung der Akkuflachzelle muss darauf geachtet werden, dass die Zuschnitte 3, 4, 5 positionsgenau und faltenfrei auf dem Stapel 2 abgelegt werden. Außerdem ist eine schnelle Ablage wünschenswert. Bei nicht positionsgenauer Ablage kann es zu Kurzschlüssen innerhalb der Akkuflachzelle 1 kommen.

Fig. 3 zeigt eine Fertigungsanlage 10 für die Akkuflachzelle 1. Der Fertigungsanlage 10 wird Anodenmaterial 61 von einer Materialspule 11 zugeführt, Kathodenmaterial 62 von einer Materialspule 12 und Separatormaterial 63, 64 von Materialspulen 13 und 14. Es kann auch vorgesehen sein, dass das Separatormaterial bereits mit dem Anodenmaterial und/oder dem Kathodenmaterial verbunden ist, so dass keine separaten Materialspulen für Separatormaterial benötigt werden.

Die Fertigungsanlage 10 besitzt eine erste Schneidstation 73, die eine Schneideinrichtung 20 für das Anodenmaterial 61 und eine Schneideinrichtung 21 für das Separatormaterial 63 umfasst. Die Fertigungsanlage 10 besitzt eine zweite Schneidstation 74 mit einer Schneideinrichtung 22 für Kathodenmaterial 62 und einer Schneideinrichtung 23 für Separatormaterial 64. Die Fertigungsanlage umfasst demnach jeweils eine Schneideinrichtung 20, 22 für Anodenmaterial 61 bzw. Kathodenmaterial 62 sowie zwei Schneideinrichtungen 21, 23 für Separatormaterial 63, 64. Jede Schneideinrichtung 21, 23 für Separatormaterial 63, 64 ist einer Schneideinrichtung 20, 22 für Anodenmaterial 61 bzw. Kathodenmaterial 62 zugeordnet. Die beiden Schneidstationen 73, 74 sind spiegelsymmetrisch zueinander angeordnet und aufgebaut. Jeder Schneideinrichtung 20, 21, 22, 23 ist eine Zuführwalze 15 zugeordnet, die das Bandmaterial einer Schneidwalze 39, 40, 41, 42 zuführt. Für das Separatormaterial 63, 64 ist außerdem jeweils eine Umlenkwalze 28 vorgesehen, da das Separatormaterial 63, 64 über die Schneideinrichtungen 20, 21, 22, 23 geführt ist.

Zwischen den Schneidstationen 73 und 74 ist eine Stapelstation 16 vorgesehen, in der ein Stapel 2 aus übereinander geschichteten Zuschnitten 3, 4, 5 angeordnet ist. Auf dem Stapel 2 werden nacheinander und fortlaufend ein Zuschnitt 5 von Separatormaterial 63, ein Zuschnitt 3 von Anodenmaterial 61, ein Zuschnitt 5 von Separatormaterial 64 und ein Zuschnitt 4 von Kathodenmaterial 62 abgelegt, bis die gewünschte Höhe des Stapels 2 erreicht ist. Die letzte Lage bildet ein Zuschnitt 5 von Separatormaterial 63, 64.

Zur Ablage der Zuschnitte 3, 4, 5 besitzt die Fertigungsanlage 10 eine Transporteinrichtung 75, die die geschnittenen Zuschnitte 3, 4, 5 von den Schneidstationen 73 und 74 zum Stapel 2 transportiert. Dabei fährt die Transporteinrichtung 75 abwechselnd die erste Schneidstation 73, die Stapelstation 16, die zweite Schneideinrichtung 74 und die Stapelstation 16 an. Dabei werden jeweils gleichzeitig ein Separatorzuschnitt 5 3 und ein Anodenzuschnitt 3 von der Schneidstation 73 aufgenommen und nacheinander auf dem Stapel 2 abgelegt und anschließend ein Separatorzuschnitt 5 und ein Kathodenzuschnitt 4 von der Schneidstation 74 aufgenommen und auf dem Stapel 2 abgelegt. Bei jeder Bewegung der Transporteinrichtung 75 von einer Schneidstation 73, 74 zum Stapel 2 werden demnach zwei Zuschnitte 3, 4, 5 transportiert und abgelegt. Während die Zuschnitte von der ersten Schneidstation 73 aufgenommen, zum Stapel 2 transportiert und auf diesem abgelegt werden, werden bereits die nächsten Zuschnitte 4, 5 bei der zweiten Schneidstation 74 geschnitten. Diese werden anschließend von der Transporteinrichtung 75 aufgenommen, zum Stapel 2 transportiert und auf dem Stapel 2 abgelegt.

Die Transporteinrichtung 75 besitzt einen Schlitten 17, an dem drei Transportwalzen 25, 26, 27 angeordnet sind. Dabei ist die mittige Transportwalze 26 eine Transportwalze für Separatorzuschnitte 5. Die linke, der ersten Schneidstation 73 zugewandte Transportwalze 25 ist eine Transportwalze für Anodenzuschnitte 3 und die in den Figuren rechts dargestellte Transportwalze 27, die der zweiten Schneidstation 74 zugewandt angeordnet ist, ist eine Transportwalze für Kathodenzuschnitte 4. Die Materialien werden in der Fertigungsanlage 10 sortenrein gehandhabt. Jedes Bauteil kommt demnach nur mit einer Materialsorte in Berührung. Bei der Aufnahme und beim Ablegen von einem Kathodenzuschnitt 4 und einem Separatorzuschnitt 5 bleibt die Transportwalze 25 für Anodenzuschnitte 3 leer. Bei der Bewegung in Gegenrichtung, also wenn ein Anodenzuschnitt 3 und ein Separatorzuschnitt 5 von der ersten Schneidstation 73 aufgenommen werden, bleibt die Transportwalze 27 für Kathodenzuschnitte 4 leer.

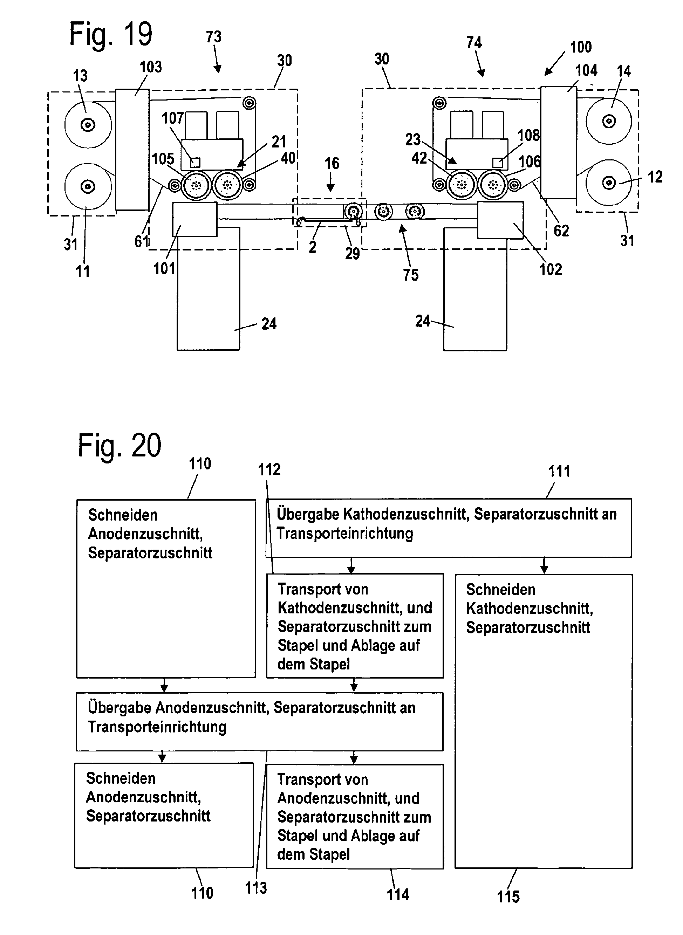

Der Ablauf des Verfahrens zur Herstellung der Akkuflachzelle 1 ist in Fig. 20 anhand der Verfahrensschritte 110 bis 115 verdeutlicht. Gleichzeitig ablaufende Verfahrensschritte sind dabei nebeneinander angeordnet. Die in der Figur links angeordneten Verfahrensschritte laufen bei der ersten Schneidstation 73 ab, die in der Mitte angeordneten Verfahrensschritte bei der Transporteinrichtung 75 und die in der rechten Spalte angeordneten Verfahrensschritte bei der zweiten Schneidstation 74. Der gezeigte Ablauf wird zur Herstellung des Stapels 2 fortlaufend wiederholt.

Im Verfahrensschritt 110 werden ein Anodenzuschnitt 3 und ein Separatorzuschnitt 5 an der ersten Schneidstation 73 geschnitten. Gleichzeitig werden im Verfahrensschritt 111 ein Kathodenzuschnitt 4 und ein Separatorzuschnitt 5, die im vorangegangenen Verfahrensschritt 115 geschnitten wurden, von der zweiten Schneidstation 74 an die Transporteinrichtung 75 übergeben. Nach der Übergabe werden im darauf folgenden Verfahrensschritt 115 der nächste Kathodenzuschnitt 4 und Separatorzuschnitt 5 in der zweiten Schneidstation 74 geschnitten. Gleichzeitig werden im Verfahrensschritt 112 die von der Transporteinrichtung 75 aufgenommenen Zuschnitte 4, 5 zum Stapel 2 transportiert und auf diesem abgelegt. Anschließend fährt die Transporteinrichtung 75 weiter zur ersten Schneidstation 73, wo ein Anodenzuschnitt 3 und ein Separatorzuschnitt 5, die im Verfahrensschritt 110 geschnitten wurden, im Verfahrensschritt 113 an die Transporteinrichtung 75 übergeben werden. Anschließend werden im Verfahrensschritt 114 dieser Anodenzuschnitt 3 und Separatorzuschnitt 5 zum Stapel 2 transportiert und auf diesem abgelegt. In der ersten Schneidstation 73 wird im Verfahrensschritt 110 währenddessen bereits der nächste Anodenzuschnitt 3 und Separatorzuschnitt 5 geschnitten. In der zweiten Schneidstation 74 können ein Kathodenzuschnitt 4 und ein Separatorzuschnitt 5 noch geschnitten werden, bis die Transporteinrichtung 75 wieder zur zweiten Schneidstation 74 gefahren ist.

Dadurch, dass das Schneiden der Zuschnitte parallel zum Transport und dem Ablegen der vorangegangenen Zuschnitte erfolgt, ergeben sich kurze Taktzeiten. Dadurch, dass jede Schneidstation 73, 74 eine Schneideinrichtung 21, 23 für Separatormaterial 63, 64 besitzt, und die Anodenzuschnitte 3 und Kathodenzuschnitte 4 jeweils gleichzeitig mit dem zugeordneten Separatorzuschnitt 5 geschnitten, transportiert und nacheinander abgelegt werden, ergeben sich sehr hohe Taktzeiten. Außerdem kann erreicht werden, dass die Materialspulen 11 bis 14 bei etwa gleicher Länge etwa gleichzeitig gewechselt werden müssen und nicht ein doppelt so häufiges Wechseln der Separatorspulen 13, 14 notwendig wird, da etwa doppelt so viel Separatormaterial in den Stapel 2 geschichtet wird.

Der Stapel 2 darf für eine gute Funktion und hohe Lebensdauer der Akkuflachzelle 1 nur eine sehr geringe Feuchtigkeit besitzen. Deshalb muss die Fertigungsanlage 10 in einem vergleichsweise trockenen Raum arbeiten. Um den trocken zu haltenden Bereich möglichst klein zu halten, ist vorgesehen, dass einzelne Bereiche der Fertigungsanlage 10 gekapselt sind, wobei hier unterschiedliche Trocknungsstufen vorgesehen sein können. Der Stapel 2 befindet sich vorteilhaft in dem in Fig. 3 schematisch gezeigten ersten Bereich 29, der den Bereich der Fertigungsanlage 10 mit der geringsten Luftfeuchtigkeit bezeichnet. Die Schneidstationen 73 und 74 sind vorteilhaft jeweils in einem zweiten Bereich 30 angeordnet, in dem die Luftfeuchtigkeit etwas höher sein darf als im ersten Bereich 29. Ein dritter gekapselter Bereich 31 umfasst die Materialspulen 11, 12, 13 und 14, die einzeln oder, wie in Fig. 3 schematisch gezeigt, jeweils zu zweit zusammen gekapselt sein können. An die Bereiche 31 können sich Einrichtungen zum automatisierten Wechseln der Materialspulen 11, 12, 13, 14 anschließen. Der Wechsel der Materialspulen 11 bis 14 kann jedoch auch manuell erfolgen. In dem dritten Bereich 31 ist die Luftfeuchtigkeit größer als in dem zweiten Bereich 30, jedoch noch deutlich geringer als in der Umgebungsluft.

Da zur Förderung des Bandmaterials bzw. der Zuschnitte 3, 4, 5 die Bereiche 29, 30 und 31 miteinander verbunden sein müssen, ist vorgesehen, dass die Bereiche 29, 30, 31 Überdruck gegenüber der Umgebung besitzen, so dass das Eindringen von feuchter Umgebungsluft verhindert wird. Dabei ist vorteilhaft der Überdruck im ersten Bereich 29 am größten und wird zu den Bereichen 30 und 31 hin geringer, so dass trockene Luft aus dem ersten Bereich 29 zunächst in den zweiten Bereich 30 und dann in den dritten Bereich 31 strömt, bevor sie in die Umgebung entweicht. Dadurch, dass nicht die gesamte Fertigungsanlage 10 gekapselt wird, sondern nur die einzelnen Bereiche 29, 30, 31, ergibt sich ein deutlich einfacherer Aufbau. Antriebe und Lager werden vorteilhaft soweit möglich außerhalb des gekapselten Bereichs angeordnet. Es kann vorteilhaft sein, weitere trockene Bereiche vorzusehen, die separat gekapselt sein können und weitere Trockenheitsgrade aufweisen können.

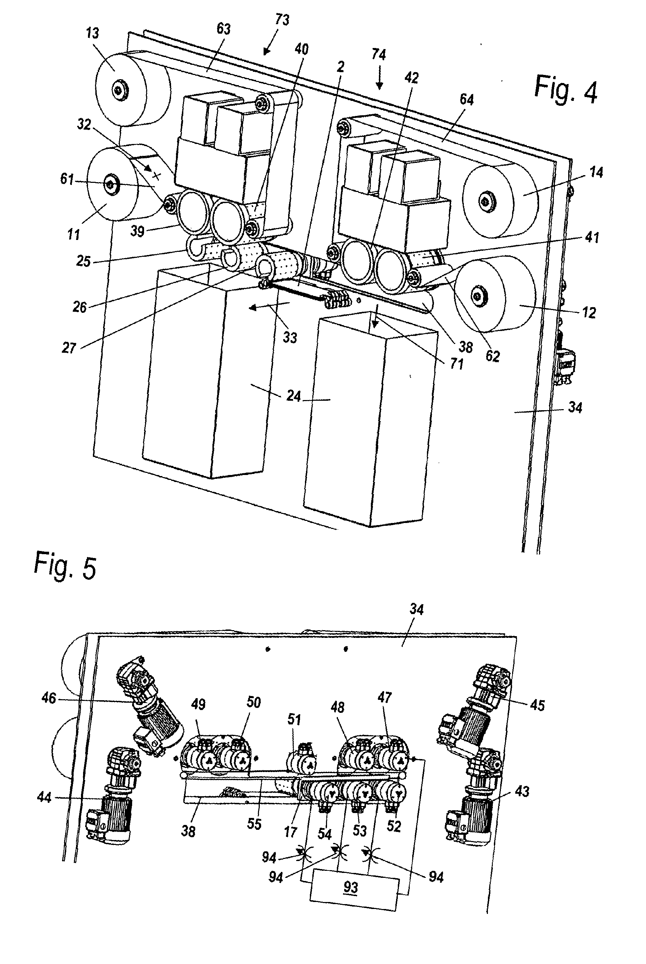

Wie Fig. 4 zeigt, besitzt die Fertigungsanlage 10 eine Tragwand 34, an der die einzelnen Komponenten angeordnet sind. Die Tragwand 34 besitzt einen Schlitz 38, in dessen Bereich der Schlitten 17 längsverschieblich zwischen den beiden Schneidstationen 73 und 74 und dem Stapel 2 geführt ist.

Wie Fig. 5 zeigt, sind die Antriebe 43 bis 46 der Materialspulen 11 bis 14, die Antriebe 47 bis 50 der Schneidwalzen 39 bis 42, der Antrieb 51 für den Schlitten 17, der im Ausführungsbeispiel einen Riemen 55 umfasst, und die Antriebe 52 bis 54 für die Transportwalzen 25 bis 27 auf der den Schneidstationen 73 und 74 und der Stapelstation 16 abgewandten Rückseite der Tragwand 34 angeordnet. Dadurch können die Antriebe auf einfache Weise außerhalb der gekapselten Bereiche 29 bis 31 angeordnet werden. Es ergibt sich außerdem ein einfacher Aufbau. Über die Antriebe 43 bis 50 und 52 bis 54 wird die Drehstellung der Walzen und Spulen gesteuert und über den Antrieb 51 die lineare Bewegung des Schlittens 17 zwischen den Schneidstationen 73, 74 und der Stapelstation 16.

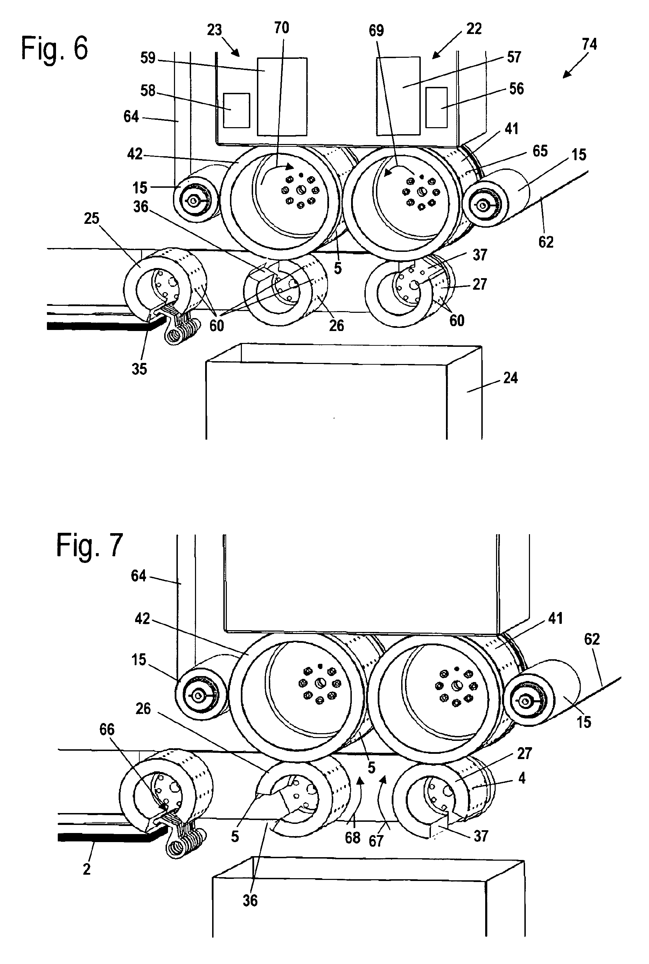

Das Bandmaterial 61, 62, 63, 64 kann Fehler enthalten, die üblicherweise bereits markiert sind. Zur Erkennung der entsprechenden Markierungen 32 ist jeder Schneideinrichtung 20, 21, 22, 23 eine Einrichtung zur optischen Erkennung zugeordnet. Dies können beispielsweise die in Fig. 6 schematisch gezeigten Kameras 56, 58 sein. Wird eine entsprechende Markierung 32 erkannt, so wird der Zuschnitt 3, 4, 5, der diese Markierung 32 umfasst, verworfen. Hierzu sind unterhalb der Schneidstationen 73 und 74 Auffangbehälter 24 angeordnet. Ein eine Markierung 32 enthaltender Zuschnitt 3, 4, 5 wird in Richtung des Pfeils 71 (Fig. 4) nach unten in den Auffangbehälter 24 fallen gelassen und nicht an die Transporteinrichtung 75 übergeben. Gleiches gilt für Randbereiche des Bandmaterials, das beim Zuschneiden entfernt wurde. Um den Stapel 2 nach Erreichen der gewünschten Höhe von der Fertigungsanlage 10 weg zu fördern, kann der Stapel 2 nach vorne in Richtung des Pfeils 33 gefördert werden. Dies ist ebenfalls in Fig. 4 schematisch angedeutet.

Um das Bandmaterial und die Zuschnitte 3, 4, 5 an den Schneidwalzen 39, 40, 41, 42 zu halten, sind Unterdr-ucköffnungen in der Umfangswand der Walzen 39 bis 42 vorgesehen. Diese Saugöffnungen 65 sind schematisch in Fig. 6 gezeigt, obwohl die Saugöffnungen 65 der Schneidwalze 41 in dieser Darstellung vom Kathodenmaterial 62 verdeckt sind.

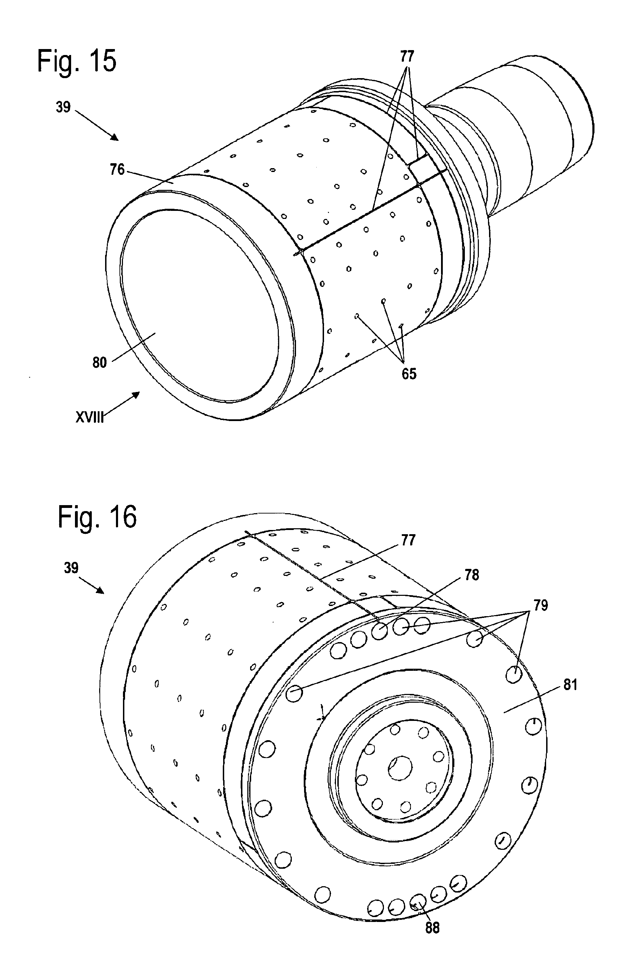

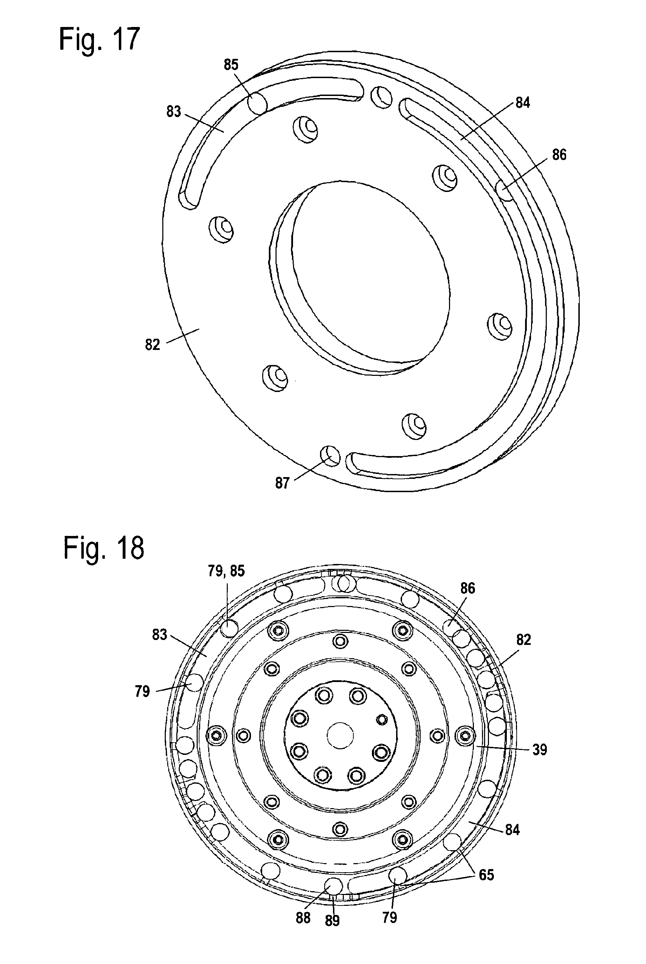

Die Figuren 15 bis 18 verdeutlichen die Fixierung des Bandmaterials 61 und des Anodenzuschnitts 3 am Beispiel der Schneidwalze 39 für Anodenmaterial 61. Die Schneidwalze 39 besitzt einen Hohlzylinder 80, der an der der Tragwand 34 zugewandten Seite durch eine Lagerplatte 81 verschlossen ist. Der Hohlzylinder 80 und die Lagerplatte 81 sind drehbar gelagert. An der Lagerplatte 81 ist eine Steuerungsplatte 82 angeordnet, die in Fig. 17 perspektivisch gezeigt ist und die ortsfest an der Tragwand 34 angeordnet ist. Bei einer Drehung des Hohlzylinders 80 und der Lagerplatte 81 dreht sich damit die Lagerplatte 81 relativ zur Steuerungsplatte 82.

Wie Fig. 15 zeigt, besitzt der Hohlzylinder 80 einen Rand 76. Der Umfang des Hohlzylinders 80 entspricht etwa dem Doppelten der Länge eines Anodenzuschnitts 3, so dass theoretisch zwei Anodenzuschnitte 3 am Umfang des Hohlzylinders 80 angeordnet sein könnten. Im Bereich der Umfangskante der Anodenzuschnitte 3 besitzt der Hohlzylinder 80 eine Vertiefung 77, die mit einer Öffnung 78 für die Schmutzabsaugung in Verbindung steht. Es ist vorgesehen, dass die Zuschnitte 3, 4, 5 auf den Schneidwalzen 39, 40, 41, 42 über Laser ausgeschnitten werden. Hierzu sind in Fig. 6 die Laser 57 und 59 schematisch gezeigt. Anstatt der Laser 57 und 59 können auch andere Schneidmittel vorgesehen sein, beispielsweise Messer oder dgl.. Auch eine Kombination mehrerer Schneidmittel kann vorteilhaft sein. Über die Laser 57 und 59 wird die Kontur der Anodenzuschnitte 3 und Kathodenzuschnitte 4 einschließlich der Kontaktlaschen 18, 19 ausgeschnitten. Während des Schneidvorgangs wird das Anodenmaterial 61 bzw. das Kathodenmaterial 62 über den an den Saugöffnungen 65 anliegenden Unterdruck gehalten. Die Saugöffnungen 65 münden in Saugkanäle 79, die in axialer Richtung der Schneidwalze 39 in der Wand des Hohlzylinders 80 verlaufen. Im Ausführungsbeispiel münden jeweils fünf nebeneinander angeordnete Saugöffnungen 65 in einen Saugkanal 79. Die Saugkanäle 79 münden gegenüberliegend zur Steuerungsplatte 82 an der Lagerplatte 81. Die Steuerungsplatte 82 besitzt zwei Nuten 83 und 84, in die die Saugkanäle 79 münden. An jeder Steuernut 83, 84 ist ein Sauganschluss 85, 86 angeordnet, so dass der Unterdruck in den beiden durch die Steuernuten 83, 84 definierten Bereichen separat gesteuert werden kann.

Im Bereich der Steuernut 83 liegt das Bandmaterial an der Schneidwalze 39 an und wird von der Kamera 58 überprüft und dem Laser 59 zugeführt. Im Bereich der Steuernut 84 ist der Zuschnitt 3 bereits geschnitten und wird über die Saugöffnungen 65 an der Schneidwalze 39 gehalten. An dem dem Laser 59 gegenüberliegenden, der Transportwalze 25 benachbarten Bereich ist ein Druckluftkanal 88 vorgesehen, der mit einem Druckluftanschluss 87 in Verbindung steht. In diesem Bereich muss sich das Material des Zuschnitts 3, 4, 5 von der Schneidwalze 39 lösen. Dies wird durch Druckluft unterstützt.

Wie Fig. 18 zeigt, stehen die einzelnen Saugkanäle 79 bei der Drehung der Schneidwalze 39 mit unterschiedlichen Steuernuten 83, 84 und dem Druckluftanschluss 87 in Verbindung. Steht ein Saugkanal 79 mit dem Druckluftanschluss 87 in Verbindung, so arbeitet er als Druckluftkanal 88 und die Saugöffnungen 65 arbeiten als Blasöffnungen 89. Wie die Figuren 15 und 16 zeigen, kann im Bereich der quer verlaufenden Kanten der Zuschnitte eine größere Anzahl von Saugkanälen 79 vorgesehen sein.

Das beim Zuschneiden abgeschnittene Material wird in die Auffangbehälter 24 nach unten fallen gelassen. Da im Bereich des Rands 76 keine Saugöffnungen 65 angeordnet sind, wird dieses weggeschnittene Material nicht auf der Schneidwalze 39 gehalten. Das Separatormaterial 63, 64 muss lediglich abgelängt und nicht an seinen Rändern zugeschnitten werden. Dadurch können die hier eingesetzten Schneidwalzen ggf. einen einfacheren Aufbau besitzen. Die Schneidwalze 41 für Kathodenmaterial 62 ist entsprechend der Schneidwalze 39, aber spiegelsymmetrisch aufgebaut. Auch die Schneidwalzen 40 und 42 für Separatormaterial 63, 64 können entsprechend aufgebaut sein.

Zum Anlegen des Unterdrucks ist die in Fig. 5 schematisch gezeichnete Unterdruckquelle 93 vorgesehen. Anstatt der über die Steuernuten 83 und 84 gesteuerten Verbindung mit der Unterdruckquelle 93 kann auch eine ventilgesteuerte Verbindung vorgesehen sein. Dies ist in Fig. 5 für die Transportwalzen 25, 26 und 27 mit den Ventilen 94 angedeutet. Die Ansteuerung der Saugöffnungen 65 von Saugöffnungen 60 in den Transportwalzen 25, 26 und 27 (Fig. 6) kann dabei je nach benötigten Steuerzeiten wahlweise ventilgesteuert oder nutgesteuert erfolgen.

Fig. 6 zeigt den Transport des Kathodenmaterials 62 und des Separatormaterials 64 exemplarisch. Entsprechend erfolgt der Transport von Anodenmaterial 61 und Separatormaterial 63 von der Schneidstation 73. Das Bandmaterial 62, 64 wird über die Zuführwalzen 15 zu den Schneidwalzen 41, 42 geführt und an diesen über Unterdruck, der an den Saugöffnungen 65 anliegt, gehalten. Die Schneidwalze 41 dreht sich in einer Drehrichtung 69 und die Schneidwalze 42 in einer Drehrichtung 70. Das Bandmaterial 62, 64 wird von den Kameras 56, 58 auf Markierungen hin untersucht. Von den Lasern 57 und 59 wird das Bandmaterial 62, 64 dann geschnitten, wobei das Separatormaterial 64 nur über einen geraden Schnitt abgelängt wird, während das Kathodenmaterial 62 mit gerundeten Kanten und mit einer Kontaktlasche 19 ausgeschnitten wird. Entstehender Schmutz wird über die Vertiefungen 77 und die Öffnung 78 abgesaugt.

Bei weiterer Drehung der Schneidwalzen 41 und 42 werden die Zuschnitte 4 und 5 an den Schneidwalzen 41 und 42 über den über die Steuernut 84 anliegenden Unterdruck fixiert. Bei der in Fig. 6 gezeigten Stellung sind die Zuschnitte 4 und 5 geschnitten und die Transportwalzen 26 und 27 sind direkt unterhalb der Schneidwalzen 41 und 42 angeordnet und zur Aufnahme der Zuschnitte 4 und 5 bereit. Die Transportwalzen 25, 26 und 27 besitzen jeweils einen Schlitz 35, 36, 37, dessen Funktion im Folgenden noch näher erläutert wird. Die Zuschnitte 3, 4, 5 werden auf den Transportwalzen 25, 26, 27 mit geringem Überstand in die Schlitze 35, 36, 37 angeordnet. Zum Übergeben der Zuschnitte 4 und 5 drehen sich die Transportwalzen 26 und 27 in Richtung der Pfeile 68 und 67 in Fig. 7. Im Berührbereich der Walzen ist an den Schneidwalzen 41 und 42 die Blasöffnung 89 angeordnet, so dass die Übergabe der Zuschnitte 4, 5 von den Schneidwalzen 41 und 42 an die Transportwalzen 26 und 27 durch Druckluft unterstützt erfolgen kann. Die Übergabe erfolgt durch Fixieren des zu übergebenden Abschnitts an den Transportwalzen 26, 27 und gleichzeitiges Lösen von den Schneidwalzen 41, 42 durch Unterbrechen des Unterdrucks oder zusätzlich von Druckluft unterstützt. Auf den Transportwalzen 26 und 27 werden die Zuschnitte 4 und 5 ebenfalls über Unterdruck fixiert. Die Übergabe erfolgt durch koordiniertes, gegenläufiges Drehen der Walzen 26, 27, 41, 42, so dass die Zuschnitte 4, 5 von den Schneidwalzen 41, 42 abgerollt und auf die Transportwalzen 26, 27 aufgerollt werden. Fig. 6 zeigt die Walzenstellung zu Beginn der Übergabe und Fig. 7 bei der Übergabe.

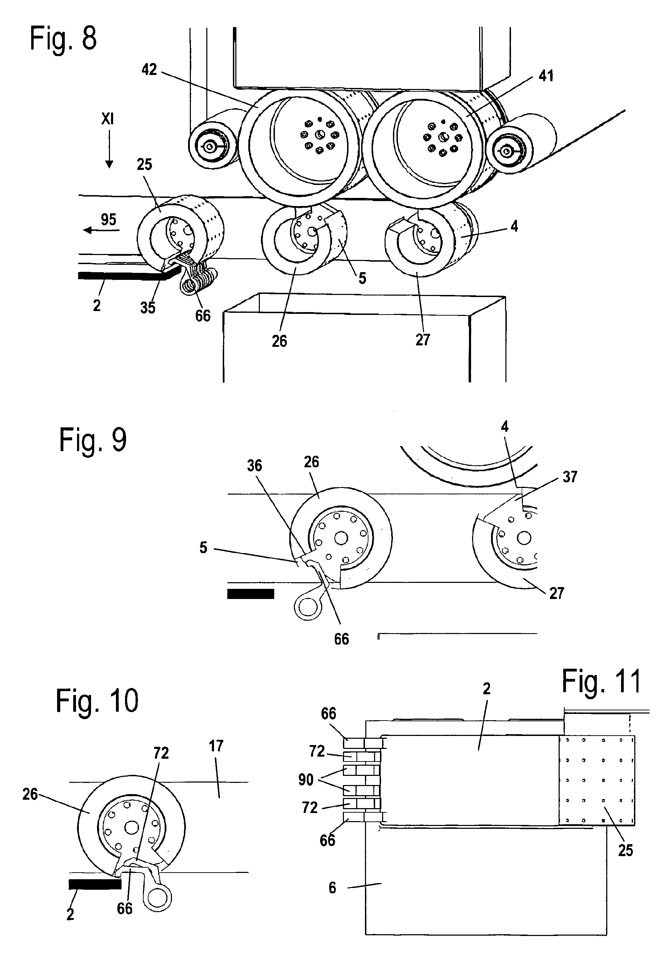

Fig. 8 zeigt die Stellung der Transportwalzen 26 und 27, nachdem sie einen Kathodenzuschnitt 4 und einen Separatorzuschnitt 5 aufgenommen haben. Die Transportwalze 25 ist leer und befindet sich am seitlichen Bereich des Stapels 2 im Bereich von Niederhaltern 66. Die Niederhalter 66 ragen dabei in den Schlitz 35 der Transportwalze 25. Die Niederhalter 66 stehen in den Bereich der Bewegungsbahn des Schlittens 17 über. Aufgrund der Schlitze 35, 36, 37 können die Transportwalzen 25, 26, 27 die Niederhalter 66 überfahren, ohne dass eine Bewegung senkrecht zur Ebene des Stapels 2 erfolgen muss.

Nachdem die Transportwalzen 26 und 27 einen Separatorzuschnitt 5 und einen Kathodenzuschnitt 4 aufgenommen haben, bewegt sich der Schlitten 17 in Richtung des Pfeils 95 in Fig. 8 in Richtung auf den Stapel 2. Die Transportwalze 26 wird im Bereich der Niederhalter 66 so gedreht, dass der Schlitz 36 nach unten zeigt und die Niederhalter 66 in den Schlitz 36 ragen. Die Niederhalter 66 sind dabei nach oben geschwenkt und vom Stapel 2 abgehoben. Der Rand des Separatorzuschnitts 5, der in den Bereich des Schlitzes 36 übersteht, kann bei dieser Bewegung unter dem Niederhalter 66 platziert werden. Sobald die Transportwalze 26 die Vorderkante des Stapels 2 erreicht hat, senkt sich der Niederhalter 66 ab und fixiert den Rand des Separatorzuschnitts 5 auf dem Stapel 2.

Fig. 11 zeigt die Anordnung der Niederhalter. Es sind auf jeder Querseite des Stapels 2 insgesamt sechs Niederhalter 66, 72, 90 angeordnet. Dabei ist sind sechs Niederhalter von der Transportwalze 25 in Fig. 11 verdeckt. Diese Niederhalter sind spiegelsymmetrisch zu den gezeigten Niederhaltern 66, 72, 90 angeordnet. Da die Fertigungsanlage 10 die Materialien sortenrein verarbeitet, sind insgesamt vier Niederhalter 66 für Separatormaterial 63, 64, vier Niederhalter 72 für Kathodenmaterial 62 und vier Niederhalter 90 für Anodenmaterial 61 vorgesehen. Wie Fig. 11 zeigt, kann der Stapel 2 direkt im Hüllmaterial 6 aufgeschichtet werden. Es kann jedoch auch vorgesehen sein, dass der vollständig aufgeschichtete Stapel 2 zum Hüllmaterial 6 transportiert wird.

Nachdem die Niederhalter 66 das Separatormaterial 5 am Rand des Stapels 2 fixiert haben, rollt die Transportwalze 26 über den Stapel 2 und legt dabei den Separatorzuschnitt 5 ab. Der Stapel 2 ist dabei über die Transportwalze 26 und die Niederhalter 66, die in Abrollrichtung 92 vor der Transportwalze 26 liegen, fixiert. Die Niederhalter 66, die sich im Bereich der Transportwalze 27 befinden, sind vom Stapel 2 abgehoben, damit der Kathodenzuschnitt 4 auf dem Stapel 2 unter die Niederhalter 66 abgelegt werden kann. Die Abrollrichtung 92 bezeichnet dabei die Richtung, in der sich die Transportwalzen 25, 26, 27 beim Abrollen auf dem Stapel 2 bewegen, also im Ausführungsbeispiel die Längsrichtung des Stapels 2.

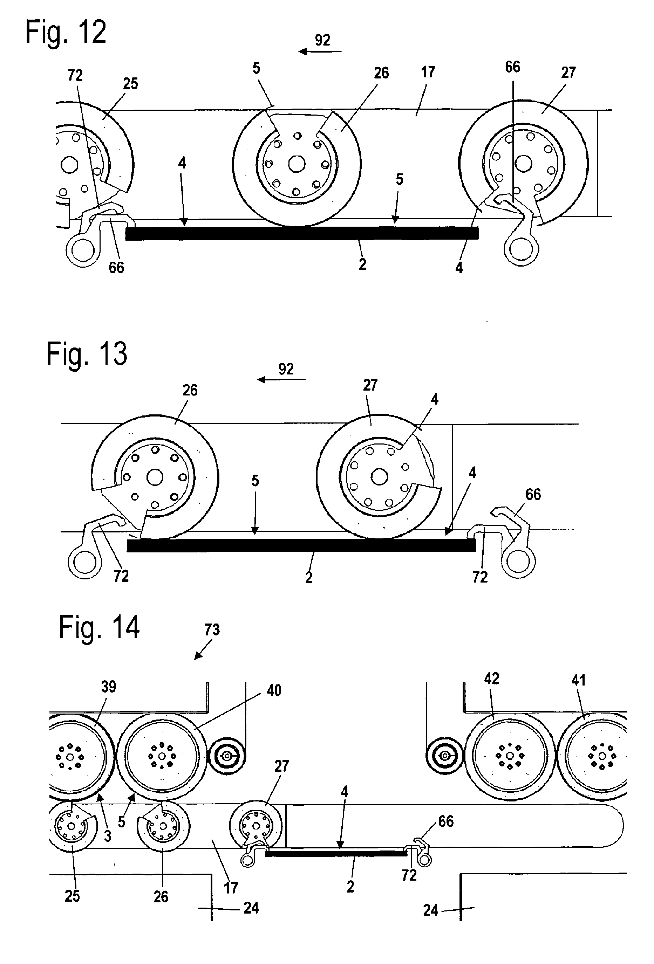

Wie Fig. 13 zeigt, wird der Kathodenzuschnitt 4 von Niederhaltern 72 fixiert, sobald der Rand des Kathodenzuschnitts 4 auf dem Stapel 2 angeordnet ist. Bei der in Fig. 13 gezeigten Stellung wird der Stapel 2 von beiden Transportwalzen 26 und 27 sowie von den in Abrollrichtung 92 hinter den Transportwalzen 26 und 27 liegenden Niederhaltern 72 fixiert.

Wie Fig. 14 zeigt, ist der Schlitten 17 im Bereich der ersten Schneidstation 73 angeordnet, sobald das Kathodenmaterial 4 vollständig von der Transportwalze 27 auf dem Stapel 2 abgerollt wurde. Der Abstand zwischen den Schneidstationen 73, 74 und dem Stapel 2 könnte jedoch auch größer gewählt sein. Während der Übergabe des Kathodenmaterials 4 und des Separatormaterials 5 an die Transportwalzen 26 und 27, dem Transport zum Stapel 2 und dem Abrollen auf dem Stapel 2 wurden bereits ein Anodenzuschnitt 3 und ein Separatorzuschnitt 5 auf den Schneidwalzen 39 und 40 geschnitten. Diese Zuschnitte 3, 5 werden nun an die Transportwalzen 25 und 26 übergeben. Während der Übergabe werden bereits die nächsten Zuschnitte 4, 5 auf den Schneidwalzen 41 und 42 geschnitten. Da während des Schneidens die Transportwalzen 25, 26, 27 nicht unter den Schneidwalzen 39, 40, 41, 42 stehen, können erkannte, markierte Materialfehler oder zugeschnittene Ränder in die Auffangbehälter 24 fallen gelassen werden.

Fig. 19 zeigt ein Ausführungsbeispiel einer Fertigungsanlage 100. Die Fertigungsanlage 100 entspricht in ihrem Aufbau im Wesentlichen der Fertigungsanlage 10 aus den Figuren 1 bis 18. Einander entsprechende Elemente sind mit gleichen Bezugszeichen bezeichnet.

Die Fertigungsanlage 100 besitzt für das Anodenmaterial 61 und das Kathodenmaterial 62 Schneideinrichtungen 101 und 102, bei denen das Bandmaterial nicht auf einer Schneidwalze geschnitten, sondern gestanzt wird. Die Walzen 105 und 106 dienen hier lediglich als Transportwalzen für den Transport des Bandmaterials zu den Schneideinrichtungen 101 und 102. Oberhalb der Walzen 105, 106 sind Kameras 107 und 108 zur Erkennung von markierten Materialfehlern angeordnet. Das Stanzen kann dabei beispielsweise von unten erfolgen. Zwischen den Materialspulen 11, 13 und den Schneideinrichtungen 40, 101 der ersten Schneidstation 73 und zwischen den Materialspulen 12, 14 und den Schneideinrichtungen 42, 102 der zweiten Schneidstation 74 ist jeweils eine Trocknungseinrichtung 103, 104 vorgesehen, in der das Anodenmaterial 61, das Kathodenmaterial 62 und das Separatormaterial 63, 64 getrocknet werden, bevor sie den Schneidstationen 73 und 74 und der Transporteinrichtung 75 zugeführt und auf dem Stapel 2 abgelegt werden. In der Trocknungseinrichtung 103, 104 kann das Bandmaterial beispielsweise schlangenlinienförmig geführt sein, um einen geringen Bauraum bei ausreichend langer Verweilzeit in den Trocknungseinrichtungen 103, 104 zu erreichen. Die Ablage auf dem Stapel 2 erfolgt dabei ebenfalls über Abrollen. Vorteilhaft erfolgt auch der Transport von den Transportwalzen 105 und 106 zu den Schneideinrichtungen 101 und 102 und von dort zu der Transporteinrichtung 75 durch Abrollen. Dadurch ist ein positionsgenaues, faltenfreies und schnelles Erstellen des Stapels 2 möglich.

## Patentansprüche

1. Fertigungsanlage für eine Akkuflachzelle (1), bestehend aus einem Stapel (2) wechselnd aufeinander geschichteter Zuschnitte (3, 4) eines Anodenmaterials (61) und eines Kathodenmaterials (62), die durch zwischengelegte Zuschnitte (5) von Separatormaterial (63, 64) elektrisch voneinander getrennt sind,
**dadurch gekennzeichnet, dass** die Zuschnitte (3, 4, 5) von mindestens einer Walze (25, 26, 27) auf dem Stapel (2) abgelegt werden.

2. Fertigungsanlage nach Anspruch 1,
**dadurch gekennzeichnet, dass** die Zuschnitte (3, 4, 5) in der Fertigungsanlage (10, 100) ausschließlich über Abrollen aufgenommen und abgelegt werden.

3. Fertigungsanlage nach Anspruch 1 oder 2,
**dadurch gekennzeichnet, dass** dem Stapel (2) mindestens ein Niederhalter (66, 72, 90) zugeordnet ist, der bereits auf dem Stapel (2) abgelegte Zuschnitte (3, 4, 5) auf dem Stapel (2) hält.

4. Fertigungsanlage nach Anspruch 3,
**dadurch gekennzeichnet, dass** die Walze (25, 26, 27) in ihrer Umfangsfläche eine Aussparung für den Niederhalter (66, 72, 90) besitzt.

5. Fertigungsanlage nach Anspruch 3 oder 4,
**dadurch gekennzeichnet, dass** für jede Materialsorte mindestens zwei Niederhalter (66, 72, 90) vorgesehen sind, die in Abrollrichtung (92) der Walze (25, 26, 27) einen Abstand zueinander besitzen.

6. Fertigungsanlage nach einem der Ansprüche 3 bis 5,
**dadurch gekennzeichnet, dass** der Stapel (2) zu jedem Zeitpunkt über mindestens einen Niederhalter (66, 72, 90) und eine in Abrollrichtung (92) von dem Niederhalter (66, 72, 90) beabstandete Walze oder einen in Abrollrichtung (92) von dem Niederhalter (66, 72, 90) beabstandeten, weiteren Niederhalter (66, 72, 90) fixiert ist.

7. Fertigungsanlage nach einem der Ansprüche 1 bis 6,
**dadurch gekennzeichnet, dass** die Zuschnitte (3, 4, 5) über mindestens eine Transportwalze (25, 26, 27) zu dem Stapel (2) transportiert und auf dem Stapel (2) abgelegt werden.

8. Fertigungsanlage nach einem der Ansprüche 1 bis 7,
**dadurch gekennzeichnet, dass** das Anodenmaterial (61), das Kathodenmaterial (62) und das Separatormaterial (63, 64) der Fertigungsanlage (10, 100) als Bandmaterial zugeführt wird, und dass die Fertigungsanlage (10, 100) mindestens eine Schneideinrichtung (20, 21, 22, 23, 101, 102) für das Bandmaterial besitzt.

9. Verfahren nach Anspruch 8,
**dadurch gekennzeichnet, dass** die Schneideinrichtung (20, 21, 22, 23) eine Schneidwalze (39, 40, 41, 42) umfasst, und dass die Zuschnitte (3, 4, 5) von der Schneidwalze (39, 40, 41, 42) an die Transportwalze (25, 26, 27) übergeben werden.

10. Fertigungsanlage nach einem der Ansprüche 1 bis 9,
**dadurch gekennzeichnet, dass** die Fixierung der Zuschnitte (3, 4, 5) auf der Walze (25, 26, 27, 39, 40, 41, 42) über Unterdruck erfolgt.

11. Fertigungsanlage nach Anspruch 10,
**dadurch gekennzeichnet, dass** die Walze (25, 26, 27, 39, 40, 41, 42) mehrere Saugkanäle (79) umfasst, die mit einer Unterdruckquelle verbunden sind.

12. Fertigungsanlage nach Anspruch 11,
**dadurch gekennzeichnet, dass** jeder Saugkanal (79) über mehrere Saugöffnungen (60, 65) an der Umfangsfläche der Walze (25, 26, 27, 39, 40, 41, 42) mündet.

13. Fertigungsanlage nach Anspruch 11 oder 12,
**dadurch gekennzeichnet, dass** die Saugkanäle (79) ventilgesteuert mit der Unterdruckquelle (93) verbunden sind.

14. Fertigungsanlage nach einem der Ansprüche 11 bis 13,
**dadurch gekennzeichnet, dass** die Saugkanäle (79) über mindestens eine Steuernut (83, 84) mit der Unterdruckquelle (93) verbunden sind.

15. Fertigungsanlage nach einem der Ansprüche 1 bis 14,
**dadurch gekennzeichnet, dass** das Ablösen der Zuschnitte (3, 4, 5) von mindestens einer Walze (39, 40, 41, 42) durch Druckluft unterstützt erfolgt.
